# EUROPEAN PATENT SPECIFICATION

(11) **EP 1 796 301 B1**
(45) Date of publication and mention of the grant of the patent: **21.07.2010**
(21) Application number: 06022955.6
(22) Date of filing: 03.11.2006
(51) Int. Cl.: H04W 80/02, H04L 1/18, H04L 29/08

(54) **Method and apparatus for RLC protocol error handling**
Verfahren und Vorrichtung zur Fehlerbehandlung des RLC-Protokolls
Procédé et dispositif pour la gestion des erreurs du protocol RLC

(30) Priority: 04.11.2005 US 597017 P
(43) Date of publication of application: 13.06.2007
(73) Proprietor: Innovative Sonic Limited, Tortola (VG)
(72) Inventor: Jiang, Sam Shiaw-Shiang, Peitou Taipei City, Taiwan (TW)
(74) Representative: Weber, Joachim

(56) References cited:
- US-A1- 2004 153 896
- "Universal Mobile Telecommunications System (UMTS); Radio Link Control (RLC) protocol specification (3GPP TS 25.322 version 6.5.0 Release 6)" ETSI STANDARDS, EUROPEAN TELECOMMUNICATIONS STANDARDS INSTITUTE, SOPHIA-ANTIPO, FR, vol. 3-R2, no. V650, September 2005 (2005-09), XP014031933 ISSN: 0000-0001

## Description

This application claims the benefit of U.S. Provisional Application No. 60/597,017, filed on Nov. 4, 2005.

The present invention relates to a method of handling protocol errors in a wireless communications system according to the pre-characterizing clause of claim 1.

Acknowledged Mode is appropriate for use in services with low requirements for real-time transmission, but high requirements for data accuracy. In order to ensure the accuracy of data, in AM, a radio control link (RLC) entity can execute a reset procedure to prevent a protocol error from causing a failure in transmission of data. According to a communications protocol specification (3GPP TS 25.322 V6.4.0 (2005-06), "Radio Link Control (RLC) protocol specification (Release 6)") established by the 3GPP, when the RLC entity of a transmitter detects three states, the reset procedure is executed. Further, the following version of this communications protocol specification (3 GPPTS 25·322 V6.5.0 Release 6. Sept. 2005) describes in Section 9.7.7 a resetting of the transmitting side of a RLC entity.

When a protocol error is detected, the reset procedure is executed, and a principle for determining the protocol error is according to whether the RLC entity of the transmitter detects one of three conditions. The three conditions of the reset procedure all occur at the transmitter of the RLC entity, i.e. an uplink for a mobile phone (user end) and a downlink for a networking device (system end). After the reset procedure has been executed, the reset procedure will stop data transfer, exchange a hyper frame number of the uplink and the downlink to ensure that the transmitter and the receiver are synchronized to each other, delete PDUs that the receiving side of the RLC entity has received but has not yet delivered to the upper layer, delete SDUs already transmitted by the transmitting side of the RLC entity, reset state variables, and finally, restart data transfer. Thus, the reset procedure not only consumes time, but also causes data deletion, thereby reducing transmission efficiency. In other words, because the reset procedure of the prior art simultaneously resets the uplink and the downlink of the RLC layer, data is unnecessarily deleted, affecting transmission efficiency, and wasting system resources.

This in mind, the present invention aims at providing a method of handling protocol errors in a wireless communications system that prevents unnecessary deletion of data and waste of system resources, and improves transmission efficiency, and a corresponding mobile communications device.

This is achieved by a method of handling protocol errors in a wireless communications system according to claim 1 and a mobile communications device according to claim 18. The respective dependent claims pertain to corresponding further developments and improvements.

As will be seen more clearly from the detailed description following below, the claimed method of handling protocol errors in a wireless communications system includes resetting only a transmitting side of a first RLC entity when a protocol error is detected.

In the following, the invention is further illustrated by way of example, taking reference to the accompanying drawings. Thereof
Fig. 1 is a functional block diagram of a communications device according to the present invention,
Fig. 2 is a diagram of program code of Fig. 1,
Fig. 3 is a flow chart diagram of an embodiment of the present invention method, and
Figs. 4 and 5 are flow chart diagrams of embodiments used to further illustrate the present invention method.

In the communications protocol specification (3GPP TS 25.322 V6.4.0 (2005-06), "Radio Link Control (RLC) protocol specification (Release 6)") established by the 3GPP, parameters, variables, timers, and control PDUs, etc. are defined according to different operating requirements. Based on the above-mentioned communications protocol specification, the parameters, variables, and timers can be defined as corresponding to the transmitting side or the receiving side of the RLC layer. Taking status variables for AM as an example, status variables corresponding to status of the receiving side comprise VR(R), VR(H), and VR(MR). Status variables corresponding to status of the transmitting side comprise VT(S), VT(A), VT(DAT), VT(MS), VT(PDU), VT(SDU), VT(RST), VT(MRW), and VT(WS). Timers corresponding to the receiving side comprise Timer_Status_Periodic and Timer_Status_Prohibit. Timers corresponding to the transmitting side comprise Timer_Poll, Timer_Poll_Periodic, Timer_Poll_Prohibit, Timer_Discard, Timer_RST, and Timer_MRW. Protocol parameters corresponding to the receiving side comprise Configured_Tx_Window_Size and Configured_Rx_Window_Size. Protocol parameters corresponding to the transmitting side comprise MaxDAT, Poll_PDU, Poll_SDU, Poll_Window, MaxRST, MaxMRW, OSD_Window_Size, and DAR_Window_Size. Definitions for the above-mentioned status variables, timers, and protocol variables can be found in the communications protocol specification, and are not repeated here.

However, regarding control PDUs, the above-mentioned communications protocol specification does not clearly define which control PDUs correspond to the

receiving side of the RLC layer, and which control PDUs correspond to the transmitting side of the RLC layer. In order to clearly describer he present invention, the following is a definition of which side each control PDU corresponds to. First, the above-mentioned communications protocol specification separates the control PDUs into three broad categories: 1) STATUS PDUs and Piggybacked STATUS PDUs, 2) RESET PDUs, and 3) RESET ACK PDUs. The first type of control PDU is primarily comprised of a header (for indicating the type of PDU), one or a plurality of super fields (SUFI), and a PAD. By setting information carried by the SUFIs, the STATUS PDU can become one of the following types:
1. ACK/NACK: A receiving status report which the receiver reports back to the transmitter regarding information about received or lost PDUs.
2. Change Window Size: Information transmitted to the transmitter by the receiver requesting the transmitter change the size of the transmission window.
3. MRW: A request by the transmitter of the receiver to advance a position of the receiving window of the receiver.
4. MRW ACK: Report sent to the receiver from the transmitter to acknowledge that the transmitter has already received a STATUS PDU comprising an MRW.

On the other hand, the RESET PDU is transmitted to the receiver from the transmitter, and used to achieve synchronization by resetting all of the protocol parameters, status variables, and timers. Analogously, the RESET ACK PDU is a report sent by the receiver to the transmitter to acknowledge receipt of the RESET PDU.

The ACK/NACK, Change Window Size, and MRW ACK STATUS PDUs and the RESET ACK PDU all correspond to the receiving side of the RLC layer. The MRW STATUS PDU and the RESET PDU correspond to the transmitting side of the RLC layer.

Having clearly defined which control PDUs correspond to which side of the RLC layer, we can now move on to describe the embodiments of the present invention.

The present invention relates to a wireless communication system operating in Acknowledged Mode, and is utilized to reset a single side of the RLC layer to handle protocol errors to increase transmission efficiency and prevent waste of system resources. The wireless communications system is preferably a 3G mobile communications system.

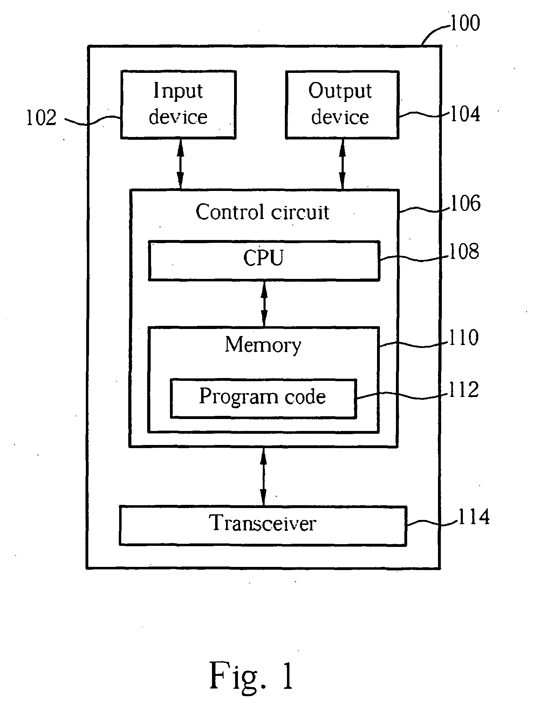

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

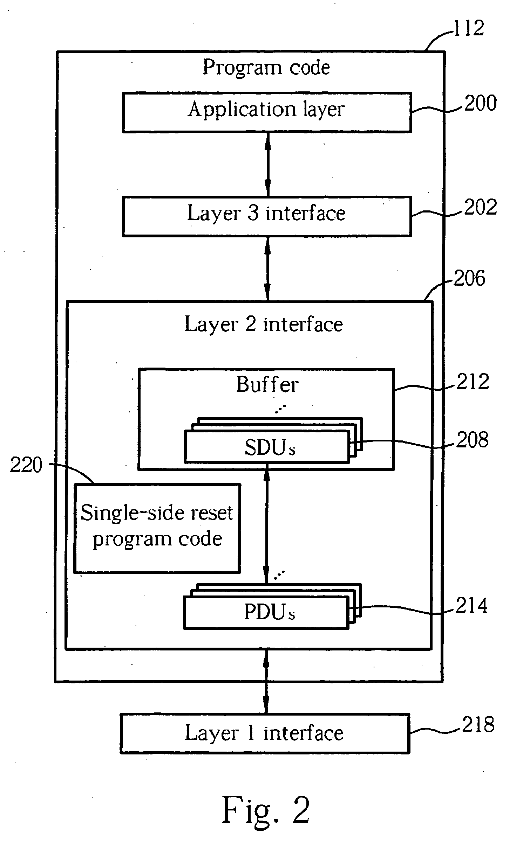

Please continue to refer to Fig. 2. Fig. 2 is a diagram of the program code 112 shown in Fig. 1. The program code 112 comprises an application layer 200, a Layer 3 interface 202, and a Layer 2 interface 206, and is coupled to a Layer 1 interface 218. When a signal is transmitted, the Layer 2 interface 206 forms a plurality of SDUs 208 according to data submitted by the Layer 3 interface 202, and stores the plurality of SDUs 208 in a buffer 212. Then, based on the SDUs 208 stored in the buffer 212, the Layer 2 interface 206 generates a plurality of PDUs 214, and sends the plurality of PDUs 214 to a destination terminal through the Layer 1 interface 218. In contrast, when a wireless signal is received, the signal is received through the Layer 1 interface 218, then delivered as PDUs 214 to the Layer 2 interface 206. The Layer 2 interface 206 restores the PDUs 214 to SDUs 208 and stores the SDUs 208 in the buffer 212. Last, the Layer 2 interface 206 delivers the SDUs 208 stored in the buffer 212 to the Layer 3 interface 202.

When the communications device 100 operates in AM, if the RLC entity, i.e. the Layer 2 interface 206, detects a protocol error, the reset procedure can be executed to prevent the protocol error from causing data transmission failure. The present invention can reset the RLC entity in one side according to a single-side reset procedure program code 220, thereby increasing transmission efficiency and preventing waste of system resources.

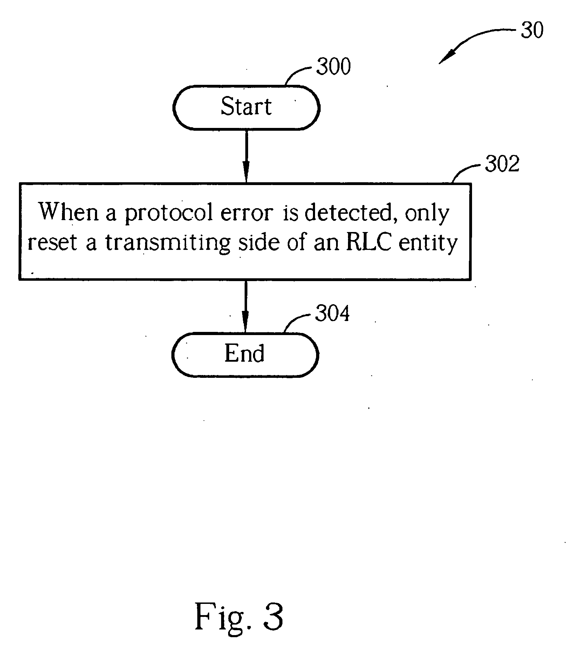

Please refer to Fig. 3, which is a diagram of a process 30 according to the present invention. The process 30 is used in a wireless communications system for handling protocol errors by resetting a single side of an RLC layer, and can be seen as the single-side reset procedure program code 220. The process 30 comprises the following steps:

### Step 300: Start.

Step 302: When a protocol error is detected, only reset a transmitting side of an RLC entity.

### Step 304: End.

Thus, according to the process 30, when the present invention detects the protocol error, only the transmitting side of the RLC entity is reset, without changing or affecting the operation of the receiving side of the RLC entity. The following three conditions can be used to determine if a protocol error has occurred:
Condition 1: "No discard after MaxDAT number of transmissions" mode is configured, and the variable VT(DAT) is equal to the parameter MaxDAT, and then the RLC layer reset procedure will be executed.
Condition 2: The variable VT(MRW) is equal to the parameter MaxMRW.
Condition 3: A STATUS PDU reported by the receiver to the transmitter or a piggybacked STATUS PDU contains an erroneous sequence number, such as a sequence number reported as missing that has already been acknowledged as received, or a sequence number reported as received that has not yet been transmitted by the transmitter.

All three conditions mentioned above for executing the reset procedure occur in the transmitting side of the RLC entity, i.e. the uplink for the user end (e.g. a mobile phone) and the downlink for the system end (e.g. a network terminal). When the RLC entity detects one of the three conditions mentioned above, the present invention can only reset the transmitting side of the RLC entity. After only starting resetting the transmitting side of the RLC entity, the RLC entity can preferably transmit a RESET PDU comprising a Hyper Frame Number Indicator (HFNI) field to an RLC entity of a target end to indicate a current hyper frame number of the transmitter of the RLC entity. Further, the RLC entity will stop transmitting PDUs and delete control PDUs corresponding to the transmitting side, such as an MRW STATUS PDU. In addition, after only starting resetting the transmitting side of the RLC entity, the present invention does not stop a reset timer Timer_RST, a periodic polling timer Timer_Poll_Periodic, an SDU discard timer Timer_Discard, and a plurality of timers corresponding to the receiving side of the RLC entity, e.g. a status prohibiting timer Timer_Status_Prohibit and a periodic status timer Timer_Status_Periodic. Preferably, the present invention can stop a plurality of timers corresponding to the transmitting side, e.g. a polling timer Timer_Poll, a poll prohibiting timer Timer_Poll_Prohibit, and an MRW timer Timer_MRW.

In other words, when the protocol error is detected, the present invention only resets the transmitting side of the RLC entity, and does not change or affect the operation of the receiving side of the RLC entity. In this way, the present invention prevents unnecessary discarding of data, thereby increasing transmission efficiency. Taking the user end detecting the protocol error and executing the process 30 as an example, the process 30 will only reset the uplink of the user end, and the data transmission of the downlink will not be stopped. In other words, after the protocol error occurs in the uplink of the user end and the reset procedure is started, the process 30 will not affect the data transmission in the downlink, and the PDUs in the receiving buffer of the downlink will not be deleted, thereby maintaining data transmission efficiency.

In addition, when the RLC entity of the system end successfully receives the RESET PDU, the RLC entity of the system end will respond with a RESET ACK PDU and then begin transmitting PDUs. If the RESET ACK PDU is lost in the wireless transmission process, the RLC entity of the user end will retransmit another RESET PDU. In this situation, because the present invention does not change the operation of the receiving side of the RLC entity, the downlink of the user end can continue receiving PDUs, such that the PDUs outputted by the system end will not be wasted.

Thus, through the process 30, the present invention can prevent unnecessary deletion of data, thereby improving transmission efficiency and preventing waste of system resources.

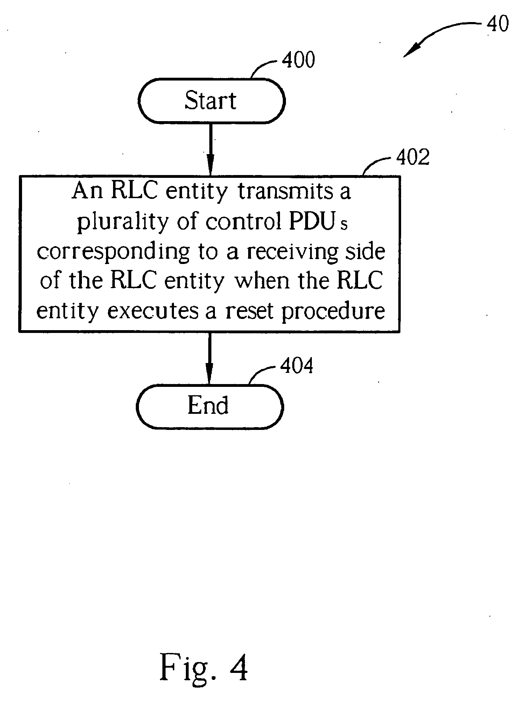

Please refer to Fig. 4. Fig. 4 is a diagram of a process 40 according to a first embodiment used to further illustrate the present invention. The process 40 is used in a wireless communications system for handling a protocol error by resetting a single side of an RLC layer. The process 40 can be seen as the single-side reset procedure program code 220. The process 40 comprises the following steps:
Step 400: Start.
Step 402: An RLC entity transmits a plurality of control PDUs corresponding to a receiving side of the RLC entity when the RLC entity executes a reset procedure.
Step 404: End.

According to the process 40, after the RLC entity starts the reset procedure, the RLC entity can transmit the control PDUs corresponding to the receiving side. Like the description above, the control PDUs corresponding to the receiving side comprise the ACK/NACK, Change Window Size, and MRW ACK STATUS PDU, and the RESET ACK PDU. Because the process 40 can continue to transmit the control PDUs corresponding to the receiving side after the reset procedure has started, the RLC entity can continue to determine information related to the RLC entity (itself), such as PDU reception status (positively or negatively acknowledged), whether an MRW request is positively or negatively acknowledged, and whether a RESET PDU has been received. For the user end (such as the mobile communications device), the receiving side of the RLC entity is the downlink; and for the system end (such as the networking device), the receiving side of the RLC entity is the uplink. Thus, after the user end starts the reset procedure on the uplink through the process 40, the RLC entity of the system end can continue to determine the transmission status of the downlink of the user end.

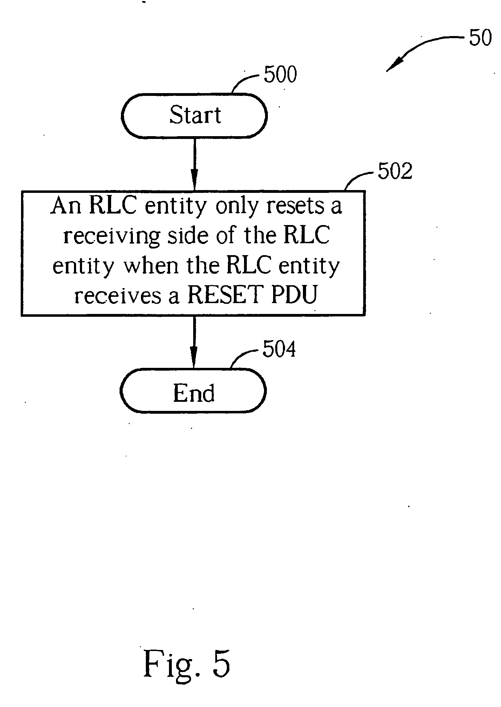

Of course, resetting the transmitting side of one end is analogous to resetting the receiving side of the other end. Please refer to Fig. 5, which is a diagram of a process 50 according to a second embodiment used to further illustrate the present invention. The process 50 is used in a wireless communications system for handling a protocol error by resetting a single side of an RLC layer, and can be seen as the single-side reset procedure program code 220. The process 50 comprises the following steps:
Step 500: Start.
Step 502: The RLC entity only resets the receiving side of the RLC entity when the RLC entity receives a RESET PDU.
Step 504: End.

According to the process 50, when the RLC entity receives the RESET PDU, the RLC entity only resets its receiving side. For the user end (such as the mobile communications device), the receiving end of the RLC entity is its downlink; and, for the system end (such as the networking device), the receiving side of the RLC entity is its uplink. Thus, the present invention can only reset the downlink of the user end or the uplink of the system end through the process 50. Further, when the RLC entity only resets the receiving side, the RLC entity of one end preferably can output a RESET ACK PDU to advise an RLC entity of the other end that the RLC entity of the one end has already started the reset procedure according to a request from the other end.

In conclusion, the present invention can reset a single side, i.e. an uplink or a downlink, of an RLC entity to prevent unnecessary deletion of data and waste of system resources, and improve transmission efficiency.

## Claims

1. A method of handling protocol errors by a first Radio Link Control, called RLC hereinafter, entity of a first communications apparatus (100) in a wireless communications system, the wireless communications system operating in Acknowledged Mode and comprising the first communications apparatus and a second communications apparatus that have established a wireless connection, the method comprising:
the first RLC entity resetting to an original state of a transmitting side of the first RLC entity when a protocol error of the transmitting side is detected; (302) and
the first RLC entity not resetting to an original state of a receiving side of the first RLC entity when the protocol error of the transmitting side is detected. (302)

2. The method of claim 1 **characterized by** the first RLC entity transmitting a RESET Protocol Data Unit, called PDU hereinafter, to a second RLC entity of the second communications apparatus, wherein the RESET PDU comprises a Hyper Frame Number Indicator, called HFNI hereinafter, field for indicating a current hyper frame number of the transmitting side of the first RLC entity.

3. The method of claim 1 **characterized by** detecting the protocol error when a Service Data Unit, called SDU hereinafter, discard function of the first RLC entity operates in a first mode and after a number of times a PDU has been scheduled reaches a first maximum allowed number.

4. The method of claim 3 **characterized in that** the first mode is a mode that an SDU discard procedure is not triggered after the first maximum allowed number of transmissions.

5. The method of claim 1 **characterized by** detecting the protocol error when a number of times a Move Receiving Widow, called MRW hereinafter, super field of the first RLC entity has been transmitted reaches a second maximum allowed number.

6. The method of claim 1 **characterized by** detecting the protocol error when the first RLC entity receives a STATUS PDU comprising an erroneous sequence number.

7. The method of claim 6 **characterized in that** the STATUS PDU is a piggybacked STATUS PDU.

8. The method of claim 1 **characterized by** the first RLC entity stopping PDU transmission.

9. The method of claim 1 **characterized by** the first RLC entity discarding a control PDU corresponding to the transmitting side of the first RLC entity.

10. The method of claim 9 **characterized in that** the control PDU is an MRW STATUS PDU.

11. The method of claim 1 **characterized by** the first RLC entity not stopping a plurality of timers corresponding to a receiving side of the first RLC entity.

12. The method of claim 11 **characterized in that** the plurality of timers corresponding to the receiving side of the RLC entity comprise a status prohibit timer Timer_Status_Prohibit and a periodic status timer Timer_Status_Periodic.

13. The method of claim 11 **characterized by** the first RLC entity not stopping a reset timer Timer_RST, a periodic polling timer Timer_Poll_Periodic, and an SDU discard timer Timer_Discard.

14. The method of claim 13 **characterized by** the first RLC entity stopping a timer corresponding to the transmitting side of the first RLC entity except the reset timer Timer_RST, the periodic polling timer Timer_Poll_Periodic, and the SDU discard timer Timer_Discard.

15. The method of claim 14 **characterized by** the first RLC entity stopping a polling timer Timer_Poll, a poll prohibit timer Timer_Poll_Prohibit, and an MRW timer Timer_MRW.

16. The method of claim 1 **characterized by** the first RLC entity transmitting at least one control PDU corresponding to the receiving side of the first RLC entity when the first RLC entity executes a reset procedure. (402)

17. The method of claim 16 **characterized in that** the at least one control PDU comprises an Acknowledged, called ACK hereinafter, STATUS PDU, a Negatively Acknowledged, called NACK hereinafter, STATUS PDU, a Change Window Size STATUS PDU, an MRW ACK STATUS PDU, or a RESET ACK PDU.

18. A first mobile communications device (100) for a wireless communications system operating in Acknowledged Mode, for handling protocol errors and having a wireless connection established with a second mobile communications device, the first mobile communications device comprising:
a control circuit (106) for controlling operations of the first mobile communications device;
a central processing unit (108) for executing a program code (112) to operate the control circuit; and
a memory (110) storing the program code;
wherein the program code comprises instructions for executing the following steps :
a first Radio link Control, called RLC hereinafter, entity resetting to an original state of a transmitting side of the first Radio Link Control entity when a protocol error of the transmitting side is detected (220, 302); and
the first RLC entity no resetting to an original state of a receiving side of the first RLC entity when the protocol error is detected (220, 302).

19. The mobile communications device of claim 18 **characterized in that** the program code further comprises the first RLC entity transmitting a RESET Protocol Data Unit, called PDU hereinafter, to a second RLC entity of the second mobile communications device, the RESET PDU comprising a Hyper Frame Number Indicator, called HFNI hereinafter, field for indicating a current hyper frame number of the transmitting side of the first RLC entity.

20. The mobile communications device of claim 18 **characterized by** means of detecting the protocol error in the program code when an Service Data Unit, called SDU hereinafter, discard function of the first RLC entity operates in a first mode and a number of times a PDU has been scheduled for transmission reaches a first maximum allowed number.

21. The mobile communications device of claim 20 **characterized in that** the first mode is a mode that an SDU discard procedure is not triggered after the first maximum allowed number of transmissions.

22. The mobile communications device of claim 18 **characterized by** means of detecting the protocol error in the program code when a number of times a Move Receiving Widow, called MRW hereinafter, super field of the first RLC entity has been transmitted equals a second maximum allowed number.

23. The mobile communications device of claim 18 **characterized by** means of detecting the protocol error in the program code when the first RLC entity receives a STATUS PDU comprising an erroneous sequence number.

24. The mobile communications device of claim 23 **characterized in that** the STATUS PDU is a piggybacked STATUS PDU.

25. The mobile communications device of claim 18 **characterized in that** the program code further comprises the first RLC entity stopping transmission of PDUs.

26. The mobile communications device of claim 18 **characterized in that** the program code further comprises the first RLC entity deleting a control PDU corresponding to the transmitting side of the first RLC entity.

27. The mobile communications device of claim 26 **characterized in that** the control PDU is an MRW STATUS PDU.

28. The mobile communications device of claim 18 **characterized in that** the program code further comprises the first RLC entity not stopping a plurality of timers corresponding to a receiving side of the first RLC entity.

29. The mobile communications device of claim 28 **characterized in that** the plurality of timers corresponding to the receiving side of the first RLC entity comprise a status prohibit timer Timer_Status_Prohibit and a periodic status timer Timer_Status_Periodic.

30. The mobile communications device of claim 28 **characterized in that** the program code further comprises the first RLC entity not stopping a reset timer Timer_RST, a periodic polling timer Timer_Poll_Periodic, and an SDU discard timer Timer_Discard.

31. The mobile communications device of claim 30 **characterized in that** the program code further comprises the first RLC entity stopping a plurality of timers corresponding to the transmitting side of the first RLC entity other than the reset timer Timer_RST, the periodic polling timer Timer_Poll_Periodic, and the SDU discard timer Timer_Discard.

32. The mobile communications device of claim 31 **characterized by** means of stopping a polling timer Timer_Poll, a poll prohibit timer Timer_Poll_Prohibit, and an MRW timer Timer_MRW.

33. The mobile communications device of claim 18 **characterized in that** the program code further comprises the first RLC entity transmitting at least one control PDU corresponding to the receiving side of the first RLC entity when a reset procedure of the first RLC entity is executed. (402)

34. The mobile communications device of claim 33 **characterized in that** the at least one control PDU comprises an Acknowledged, called ACK hereinafter, STATUS PDU, a Negatively Acknowledged, called NACK hereinafter, STATUS PDU, a Change Window Size STATUS PDU, an MRW ACK STATUS PDU, or a RESET ACK PDU.

## Patentansprüche

1. Verfahren zur Behandlung von Protokollfehlern durch eine erste Einheit zur Funkstreckensteuerung (Radio Link Control), nachfolgend als RLC bezeichnet, einer ersten Kommunikationsvorrichtung (100) in einem drahtlosen Kommunikationssystem, wobei das drahtlose Kommunikationssystem im Acknowledged Mode arbeitet und die erste Kommunikationsvorrichtung und eine zweite Kommunikationsvorrichtung, die eine drahtlose Verbindung hergestellt haben, umfasst, wobei das Verfahren umfasst:
durch die erste RLC-Einheit, Zurücksetzen einer Senderseite der ersten RLC-Einheit in einen Ursprungszustand, wenn ein Protokollfehler der Senderseite erfasst wird (302); und
durch die erste RLC-Einheit, nicht Zurücksetzen einer Empfängerseite der ersten RLC-Einheit in einen Ursprungszustand, wenn der Protokollfehler der Senderseite erfasst wird (302).

2. Verfahren nach Anspruch 1, **dadurch gekennzeichnet, dass** die erste RLC-Einheit eine RESET-Protokolldateneinheit (Protocol Data Unit), nachfolgend als PDU bezeichnet, zu einer zweiten RLC-Einheit der zweiten Kommunikationsvorrichtung überträgt, wenn die RESET PDU ein Feld "Hyper Frame Number Indicator", nachfolgend als HFNI bezeichnet, umfasst, um eine aktuelle Hyper Frame Number der Senderseite der ersten RLC-Einheit anzuzeigen.

3. Verfahren nach Anspruch 1, **gekennzeichnet durch** Erfassen des Protokollfehlers, wenn eine Verwerffunktion für eine Servicedateneinheit (Service Data Unit), nachfolgend als SDU bezeichnet, der ersten RLC-Einheit in einem ersten Modus arbeitet und nachdem eine Anzahl von Malen, die eine PDU eingeplant wurde, eine erste maximal erlaubte Anzahl erreicht hat.

4. Verfahren nach Anspruch 3, **dadurch gekennzeichnet, dass** der erste Modus ein Modus ist, in dem eine SDU-Verwerfprozedur nach der ersten maximal erlaubten Anzahl von Übertragungen nicht ausgelöst wird.

5. Verfahren nach Anspruch 1, **gekennzeichnet durch** Erfassen des Protokollfehlers, wenn die Anzahl von Malen, die ein Überfeld "Move Receiving Window", nachfolgend als MRW bezeichnet, der ersten RLC-Einheit übertragen wurde, eine zweite maximal erlaubte Anzahl erreicht hat.

6. Verfahren nach Anspruch 1, **gekennzeichnet durch** Erfassen des Protokollfehlers, wenn die erste RLC-Einheit eine STATUS PDU empfängt, die eine fehlerhafte Sequenznummer umfasst.

7. Verfahren nach Anspruch 6, **dadurch gekennzeichnet, dass** die STATUS PDU eine Huckepack-STATUS PDU ist.

8. Verfahren nach Anspruch 1, **dadurch gekennzeichnet, dass** die erste RLC-Einheit die PDU-Übertragung stoppt.

9. Verfahren nach Anspruch 1, **dadurch gekennzeichnet, dass** die erste RLC-Einheit eine Steuer-PDU verwirft, die zu der Senderseite der ersten RLC-Einheit korrespondiert.

10. Verfahren nach Anspruch 9, **dadurch gekennzeichnet, dass** die Steuer-PDU eine MRW STATUS PDU ist.

11. Verfahren nach Anspruch 1, **dadurch gekennzeichnet, dass** die erste RLC-Einheit eine Vielzahl von Zeitgebern, die zu einer Empfängerseite der ersten RLC-Einheit korrespondieren, nicht stoppt.

12. Verfahren nach Anspruch 11, **dadurch gekennzeichnet, dass** die Vielzahl von Zeitgebern, die zu der Empfängerseite der RLC-Einheit korrespondieren, einen Statusverhinderungs-Zeitgeber Timer_Status_Prohibit und einen periodischen Status-Zeitgeber Timer_Status_Periodic umfassen.

13. Verfahren nach Anspruch 11, **dadurch gekennzeichnet, dass** die erste RLC-Einheit einen Rücksetz-Zeitgeber Timer_RST, einen periodischen Abfrage-Zeitgeber Timer_Poll_Periodic und einen SDU-Verwerf-Zeitgeber Timer_Discard nicht stoppt.

14. Verfahren nach Anspruch 13, **dadurch gekennzeichnet, dass** die erste RLC-Einheit einen Zeitgeber, der zu der Senderseite der ersten RLC-Einheit korrespondiert, stoppt, mit Ausnahme des Rücksetz-Zeitgebers TIMER_RST, des periodischen Abfrage-Zeitgebers Timer_Poll_Periodic und des SDU-Verwerf-Zeitgebers Timer_Discard.

15. Verfahren nach Anspruch 14, **dadurch gekennzeichnet, dass** die erste RLC-Einheit einen Abfrage-Zeitgeber Timer_Poll, einen Abfrageverhinderungs-Zeitgeber Timer_Poll_Prohibit und einen MRW-Zeitgeber Timer_MRW stoppt.

16. Verfahren nach Anspruch 1, **dadurch gekennzeichnet, dass** die erste RLC-Einheit zumindest eine Steuer-PDU, die zur Empfängerseite der ersten RLC-Einheit korrespondiert, überträgt, wenn die erste RLC-Einheit eine Rücksetzprozedur ausführt (402).

17. Verfahren nach Anspruch 16, **dadurch gekennzeichnet, dass** die zumindest eine Steuer-PDU eine Acknowledged, nachfolgend als ACK bezeichnet, STATUS PDU, eine negativ Acknowledged, nachfolgend als NACK bezeichnet, STATUS PDU, eine Change Window Size STATUS PDU, eine MRW ACK STATUS PDU oder eine RESET ACK PDU umfasst.

18. Erste mobile Kommunikationsvorrichtung (100) für ein drahtloses Kommunikationssystem, das im Acknowledged Mode arbeitet, zum Behandeln von Protokollfehlern, die in einer drahtlosen Verbindung mit einer zweiten mobilen Kommunikationsvorrichtung steht, wobei die erste mobile Kommunikationsvorrichtung umfasst:
eine Steuerschaltung (106) zum Steuern der Funktionen der ersten mobilen Kommunikationsvorrichtung;
eine zentrale Recheneinheit (108) zum Ausführen eines Programmcodes (112),
um die Steuerschaltung zu betätigen; und
einen Speicher (110), der den Programmcode speichert;
wobei der Programmcode Instruktionen zum Ausführen der folgenden Schritte umfasst:
durch eine erste Einheit zur Funkstreckensteuerung (Radio Link Control), nachfolgend als RLC bezeichnet, Rücksetzen einer Senderseite der ersten Funkstreckensteuerungs-Einheit in einen Ursprungszustand, wenn ein Protokollfehler der Senderseite erfasst wird (220, 302); und
durch die erste RLC-Einheit, nicht Rücksetzen einer Empfängerseite der ersten RLC-Einheit in einen Ursprungszustand, wenn der Protokollfehler erfasst wird (220, 302).

19. Mobile Kommunikationsvorrichtung nach Anspruch 18, **dadurch gekennzeichnet, dass** der Programmcode ferner umfasst, dass die erste RLC-Einheit eine RESET-Protokolldateneinheit (Protocol Data Unit), nachfolgend als PDU bezeichnet, zu einer zweiten RLC-Einheit der zweiten Kommunikationsvorrichtung überträgt, wenn die RESET PDU ein Feld "Hyper Frame Number Indicator", nachfolgend HFNI, umfasst, um eine aktuelle Hyper Frame Number der Senderseite der ersten RLC-Einheit anzuzeigen.

20. Mobile Kommunikationsvorrichtung nach Anspruch 18, **gekennzeichnet durch** Mittel zum Erfassen des Protokollfehlers in dem Programmcode, wenn eine Verwerffunktion für eine Servicedateneinheit (Service Data Unit), nachfolgend als SDU bezeichnet, der ersten RLC-Einheit in einem ersten Modus arbeitet und wenn eine Anzahl von Malen, die eine PDU für eine Übertragung eingeplant wurde, eine erste maximal erlaubte Anzahl erreicht hat.

21. Mobile Kommunikationsvorrichtung nach Anspruch 20, **dadurch gekennzeichnet, dass** der erste Modus ein Modus ist, in dem eine SDU-Verwerfprozedur nach der ersten maximal erlaubten Anzahl von Übertragungen nicht ausgelöst wird.

22. Mobile Kommunikationsvorrichtung nach Anspruch 18, **gekennzeichnet durch** Mittel zum Erfassen des Protokollfehlers in dem Programmcode, wenn eine Anzahl von Malen, die ein Überfeld "Move Receiving Window", nachfolgend als MRW bezeichnet, der ersten RLC-Einheit übertragen wurde, gleich einer zweiten maximal erlaubten Anzahl ist.

23. Mobile Kommunikationsvorrichtung nach Anspruch 18, **gekennzeichnet durch** Mittel zum Erfassen des Protokollfehlers in dem Programmcode, wenn die erste RLC-Einheit eine STATUS PDU empfängt, die eine fehlerhafte Sequenznummer umfasst.

24. Mobile Kommunikationsvorrichtung nach Anspruch 23, **dadurch gekennzeichnet, dass** die STATUS PDU eine Huckepack-STATUS PDU ist.

25. Mobile Kommunikationsvorrichtung nach Anspruch 18, **dadurch gekennzeichnet, dass** der Programmcode ferner umfasst, dass die erste RLC-Einheit die Übertragung von PDUs stoppt.

26. Mobile Kommunikationsvorrichtung nach Anspruch 18, **dadurch gekennzeichnet, dass** der Programmcode ferner umfasst, dass die erste RLC-Einheit eine Steuer-PDU, die zu der Senderseite der ersten RLC-Einheit korrespondiert, löscht.

27. Mobile Kommunikationsvorrichtung nach Anspruch 26, **dadurch gekennzeichnet, dass** die Steuer-PDU eine MRW STATUS PDU ist.

28. Mobile Kommunikationsvorrichtung nach Anspruch 18, **dadurch gekennzeichnet, dass** der Programmcode ferner umfasst, dass die erste RLC-Einheit eine Vielzahl von Zeitgebern, die zu einer Empfängerseite der ersten RLC-Einheit korrespondieren, nicht stoppt.

29. Mobile Kommunikationsvorrichtung nach Anspruch 28, **dadurch gekennzeichnet, dass** die Vielzahl von Zeitgebern, die zu der Empfängerseite der RLC-Einheit korrespondieren, einen Statusverhinderungs-Zeitgeber Timer_Status_Prohibit und einen periodischen Status-Zeitgeber Timer_Status_Periodic umfassen.

30. Mobile Kommunikationsvorrichtung nach Anspruch 28, **dadurch gekennzeichnet, dass** der Programmcode ferner umfasst, dass die erste RLC-Einheit einen Rücksetz-Zeitgeber Timer_RST, einen periodischen Abfrage-Zeitgeber Timer_Poll_Periodic und einen SDU-Verwerf-Zeitgeber Timer_Discard nicht stoppt.

31. Mobile Kommunikationsvorrichtung nach Anspruch 30, **dadurch gekennzeichnet, dass** der Programmcode ferner umfasst, dass die erste RLC-Einheit einen Zeitgeber, der zu der Senderseite der ersten RLC-Einheit korrespondiert, stoppt, mit Ausnahme des Rücksetz-Zeitgebers TIMER_RST, des periodischen Abfrage-Zeitgebers Timer_Poll_Periodic und des SDU-Verwerf-Zeitgebers Timer_Discard.

32. Mobile Kommunikationsvorrichtung nach Anspruch 31, **gekennzeichnet durch** Mittel zum Stoppen eines Abfrage-Zeitgebers Timer_Poll, eines Abfrageverhinderungs-Zeitgebers Timer_Poll_Prohibit und eines MRW-Zeitgebers Timer_MRW stoppt.

33. Mobile Kommunikationsvorrichtung nach Anspruch 18, **dadurch gekennzeichnet, dass** der Programmcode ferner umfasst, dass die erste RLC-Einheit zumindest eine Steuer-PDU, die zur Empfängerseite der ersten RLC-Einheit korrespondiert, überträgt, wenn eine Rücksetzprozedur der ersten RLC-Einheit ausgeführt wird (402).

34. Mobile Kommunikationsvorrichtung nach Anspruch 33, **dadurch gekennzeichnet, dass** die zumindest eine Steuer-PDU eine Acknowledged, nachfolgend als ACK bezeichnet, STATUS PDU, eine negativ Acknowledged, nachfolgend als NACK bezeichnet, STATUS PDU, eine Change Window Size STATUS PDU, eine MRW ACK STATUS PDU oder eine RESET ACK PDU umfasst.

## Revendications

1. Procédé pour la gestion des erreurs de protocole par une première entité de contrôle de liaison radio, ci-après dénommée RLC (Radio Link Control), d'un premier dispositif de communications (100) dans un système de communications sans fil, le système de communications sans fil fonctionnant en mode acquitté et comprenant ledit premier dispositif de communications et un second dispositif de communications qui ont établi une liaison sans fil, le procédé comprenant les étapes qui consistent en ce que :
la première entité RLC se réinitialise à un état initial d'un côté transmission de la première entité RLC lorsqu'une erreur de protocole du côté transmission est détectée (302) ; et
la première entité RLC ne se réinitialise pas à un état initial d'un côté réception de la première entité RLC lorsque l'erreur de protocole du côté transmission est détectée (302).

2. Procédé selon la revendication 1, **caractérisé en ce que** la première entité RLC transmet une unité de données de protocole, ci-après dénommée PDU (Protocol Data Unit), de type RESET (RESET PDU) à une seconde entité RLC du second dispositif de communications, dans lequel la RESET PDU comprend un champ d'indicateur du nombre d'hypertrames, ci-après dénommé HFNI (Hyper Frame Number Indicator), destiné à indiquer un nombre actuel d'hypertrames du côté transmission de la première entité RLC.

3. Procédé selon la revendication 1, **caractérisé en ce qu'**il consiste à détecter l'erreur de protocole lorsqu'une fonction d'élimination d'unité de données de service, ci-après dénommée SDU (Service Data Unit), de la première entité RLC fonctionne dans un premier mode et après que le nombre de fois où une PDU a été programmée atteint un premier nombre maximum admissible.

4. Procédé selon la revendication 3, **caractérisé en ce que** le premier mode est un mode dans lequel une procédure d'élimination de SDU n'est pas déclenchée après le premier nombre maximum admissible de transmissions.

5. Procédé selon la revendication 1, **caractérisé en ce qu'**il consiste à détecter l'erreur de protocole lorsqu'un nombre de fois où un champ (super field) de déplacement de la fenêtre de réception, ci-après dénommé MRW (Move Receiving Window), de la première entité RLC a été transmis atteint un second nombre maximum admissible.

6. Procédé selon la revendication 1, **caractérisé en ce qu'**il consiste à détecter l'erreur de protocole lorsque la première entité RLC reçoit une PDU de type STATUS (STATUS PDU) comprenant un numéro de séquence erroné.

7. Procédé selon la revendication 6, **caractérisé en ce que** la STATUS PDU est une STATUS PDU superposée.

8. Procédé selon la revendication 1, **caractérisé en ce que** la première entité RLC arrête la transmission des PDU.

9. Procédé selon la revendication 1, **caractérisé en ce que** la première entité RLC élimine une PDU de contrôle correspondant au côté transmission de la première entité RLC.

10. Procédé selon la revendication 9, **caractérisé en ce que** la PDU de contrôle est une STATUS PDU de type MRW (MRW STATUS PDU).

11. Procédé selon la revendication 1, **caractérisé en ce que** la première entité RLC n'arrête pas une pluralité de temporisateurs correspondant à un côté réception de la première entité RLC.

12. Procédé selon la revendication 11, **caractérisé en ce que** la pluralité de temporisateurs correspondant au côté réception de l'entité RLC comprennent un temporisateur d'interdiction d'état Timer_Status_Prohibit et un temporisateur d'état périodique Timer_Status_Periodic.

13. Procédé selon la revendication 11, **caractérisé en ce que** la première entité RLC n'arrête pas un temporisateur de réinitialisation Timer_RST, un temporisateur d'interrogation périodique Timer_Poll_Periodic, et un temporisateur d'élimination de SDU Timer_Discard.

14. Procédé selon la revendication 13, **caractérisé en ce que** la première entité RLC arrête un temporisateur correspondant au côté transmission de la première entité RLC à l'exception du temporisateur de réinitialisation Timer_RST, du temporisateur d'interrogation périodique Timer_Poll_Periodic, et du temporisateur d'élimination de SDU Timer_Discard.

15. Procédé selon la revendication 14, **caractérisé en ce que** la première entité RLC arrête un temporisateur d'interrogation Timer_Poll, un temporisateur d'interdiction d'interrogation Timer_Poll_Prohibit et un temporisateur de déplacement de fenêtre de réception Timer_MRW.

16. Procédé selon la revendication 1, **caractérisé en ce que** la première entité RLC transmet au moins une PDU de contrôle correspondant au côté réception de la première entité RLC lorsque la première entité RLC exécute une procédure de réinitialisation (402).

17. Procédé selon la revendication 16, **caractérisé en ce que** l'au moins une PDU de contrôle comprend une STATUS PDU acquittée, ci-après dénommée ACK, une STATUS PDU acquittée négativement, ci-après dénommée NACK, une STATUS PDU de changement de taille de fenêtre, une MRW ACK STATUS PDU, ou une RESET ACK PDU.

18. Premier dispositif de communications mobile (100) pour un système de communications sans fil fonctionnant en mode acquitté, destiné à la gestion des erreurs de protocole et comportant une liaison sans fil établie avec un second dispositif de communications mobile, le premier dispositif de communications mobile comprenant :
un circuit de contrôle (106) destiné à contrôler les opérations du premier dispositif de communications mobile ;
une unité centrale de traitement (108) destinée à exécuter un code de programme (112) pour commander le circuit de contrôle ; et
une mémoire (110) stockant le code de programme ;
dans lequel le code de programme comprend des instructions pour l'exécution des étapes qui consistent en ce que :
une première entité de contrôle de liaison radio, ci-après dénommée RLC, se réinitialise à un état initial d'un côté transmission de la première entité de contrôle de liaison radio lorsqu'une erreur de protocole du côté transmission est détectée (220, 302) ; et
la première entité RLC ne se réinitialise pas à un état initial d'un côté réception de la première entité RLC lorsque l'erreur de protocole est détectée (220, 302).

19. Dispositif de communications mobile selon la revendication 18, **caractérisé en ce que** le code de programme comprend en outre la première entité RLC transmettant une unité de données de protocole, ci-après dénommée PDU, de type RESET à une seconde entité RLC du second dispositif de communications, la RESET PDU comprenant un champ d'indicateur du nombre d'hypertrames, ci-après dénommé HFNI, destiné à indiquer un nombre actuel d'hypertrames du côté transmission de la première entité RLC.

20. Dispositif de communications mobile selon la revendication 18, **caractérisé en ce qu'**il comporte des moyens permettant de détecter l'erreur de protocole dans le code de programme lorsqu'une fonction d'élimination d'unité de données de service, ci-après dénommée SDU, de la première entité RLC fonctionne dans un premier mode et que le nombre de fois où la transmission d'une PDU a été programmée atteint un premier nombre maximum admissible.

21. Dispositif de communications mobile selon la revendication 20, **caractérisé en ce que** le premier mode est un mode dans lequel une procédure d'élimination de SDU n'est pas déclenchée après le premier nombre maximum admissible de transmissions.

22. Dispositif de communications mobile selon la revendication 18, **caractérisé en ce qu'**il comprend des moyens permettant de détecter l'erreur de protocole dans le code de programme lorsqu'un nombre de fois où un champ (super field) de déplacement de la fenêtre de réception, ci-après dénommé MRW, de la première entité RLC a été transmis est égal à un second nombre maximum admissible.

23. Dispositif de communications mobile selon la revendication 18, **caractérisé en ce qu'**il comprend des moyens permettant de détecter l'erreur de protocole dans le code de programme lorsque la première entité RLC reçoit une STATUS PDU comprenant un numéro de séquence erroné.

24. Dispositif de communications mobile selon la revendication 23, **caractérisé en ce que** la STATUS PDU est une STATUS PDU superposée.

25. Dispositif de communications mobile selon la revendication 18, **caractérisé en ce que** le code de programme comprend en outre la première entité RLC arrêtant la transmission des PDU.

26. Dispositif de communications mobile selon la revendication 18, **caractérisé en ce que** le code de programme comprend en outre la première entité RLC supprimant une PDU de contrôle correspondant au côté transmission de la première entité RLC.

27. Dispositif de communications mobile selon la revendication 26, **caractérisé en ce que** la PDU de contrôle est une MRW STATUS PDU.

28. Dispositif de communications mobile selon la revendication 18, **caractérisé en ce que** le code de programme comprend en outre la première entité RLC n'arrêtant pas une pluralité de temporisateurs correspondant à un côté réception de la première entité RLC.

29. Dispositif de communications mobile selon la revendication 28, **caractérisé en ce que** la pluralité de temporisateurs correspondant au côté réception de la première entité RLC comprennent un temporisateur d'interdiction d'état Timer_Status_Prohibit et un temporisateur d'état périodique Timer_Status_Periodic.

30. Dispositif de communications mobile selon la revendication 28, **caractérisé en ce que** le code de programme comprend en outre la première entité RLC n'arrêtant pas un temporisateur de réinitialisation Timer_RST, un temporisateur d'interrogation périodique Timer_Poll_Periodic, et un temporisateur d'élimination de SDU Timer_Discard.

31. Dispositif de communications mobile selon la revendication 30, **caractérisé en ce que** le code de programme comprend en outre la première entité RLC arrêtant une pluralité de temporisateurs correspondant au côté transmission de la première entité RLC autres que le temporisateur de réinitialisation Timer_RST, le temporisateur d'interrogation périodique Timer_Poll_Periodic, et le temporisateur d'élimination de SDU Timer_Discard.

32. Dispositif de communications mobile selon la revendication 31, **caractérisé en ce qu'**il comprend des moyens permettant d'arrêter un temporisateur d'interrogation Timer_Poll, un temporisateur d'interdiction d'interrogation Timer_Poll_Prohibit et un temporisateur de déplacement de fenêtre de réception Timer_MRW.

33. Dispositif de communications mobile selon la revendication 18, **caractérisé en ce que** le code de programme comprend en outre la première entité RLC transmetant au moins une PDU de contrôle correspondant au côté réception de la première entité RLC lorsqu'une procédure de réinitialisation de la première entité RLC est exécutée (402).

34. Dispositif de communications mobile selon la revendication 33, **caractérisé en ce que** l'au moins une PDU de contrôle comprend une STATUS PDU acquittée, ci-après dénommée ACK, une STATUS PDU acquittée négativement, ci-après dénommée NACK, une STATUS PDU de changement de taille de fenêtre, une MRW ACK STATUS PDU, ou une RESET ACK PDU.
